# EUROPÄISCHE PATENTANMELDUNG

(11) **EP 0 961 167 A1**
(43) Veröffentlichungstag der Anmeldung: **01.12.1999**
(21) Anmeldenummer: 99108567.1
(22) Anmeldetag: 05.05.1999
(51) Int. Cl.: G03D 13/00, G03B 27/32

(54) **Fotomaterial-Leitanlage**

(30) Priorität: 28.05.1998 DE 19823906
(71) Anmelder: GRETAG IMAGING AG, CH-8105 Regensdorf (CH)
(72) Erfinder: Scodellaro, Eni, 33097 Gaio di Spilimbergo (PN) (IT)
(74) Vertreter: Muschke, Markus, Dipl.-Phys.

(57) **Zusammenfassung**

Fotomaterial-Leitanlage zum Leiten von Fotomaterial zwischen mindestens drei voneinander beabstandeten Fotomaterial-Führungswegen, entlang derer Fotomaterial, insbesondere Filme oder Fotopapier, führbar ist, die folgendes aufweist: einen Selektor (100) mit einem Aufnahmeende zum Aufnehmen von Fotomaterial von einem Ende eines Führungsweges und einem Abgabeende zum Abgeben von Fotomaterial zu einem Ende eines anderen Führungsweges, wobei der Selektor zum Führen des Fotomaterials vom Aufnahmeende zum Abgabeende ausgebildet ist, wobei der Selektor (100) zwischen verschiedene Verbindungstellungen bewegbar ist, in denen jeweils mindestens zwei Führungswege (22,30) durch den Selektor miteinander verbunden sind, um Fotomaterial von einem Wegende eines Führungsweges zu einem anderen Wegende eines anderen Führungsweges über den Selektor (100) zu führen, wobei mit einem Wechsel der Verbindungsstellung zumindestens auch einer der durch den Selektor verbundenen Wegenden wechselt.

## Beschreibung

Die vorliegende Erfindung betrifft eine Fotomaterial-Leitanlage zum Leiten von Fotomaterial zwischen voneinander beabstandeten Fotomaterial-Quellen und Senken gemäß dem Oberbegriff des Anspruches 1. Bei den Quellen und Senken kann es sich um Führungswege für Fotomaterial, Abspulkammern, Filmpatronen, Fotomaterialspeicher und sonstige Vorrichtungen handeln, die Fotomaterial aufnehmen oder abgeben.

Insbesondere betrifft die Erfindung eine Fotomaterial-Leitanlage, die Fotomaterial, das entlang verschiedener, voneinander beabstandeter Führungswege gefördert wird, zu einem weiteren Führungsweg (bzw. eine geringere Anzahl von Führungswegen), der (bzw. die) von den anderen beabstandet ist (sind), zusammenführt. Insbesondere betrifft die Erfindung weiter eine Fotomaterial-Leitanlage, die Fotomaterial, das entlang eines Führungsweges gefördert wird, auf verschiedene davon beabstandete Führungswege verteilt bzw. diversifiziert. Erfindungsgemäß handelt es sich bei Fotomaterial insbesondere um Filme oder Fotopapier bzw. Foto-Rollenmaterial, wie z.B. Filmrollenmaterial.

Das Zusammenführen von Fotomaterial, das auf verschiedenen Führungswegen gefördert wird, ist z.B. aus US 4,849,792, DE-AS 1 163 658, DE 37 13 171 A1 oder DE 44 20 659 bekannt. Dort handelt es sich insbesondere damm, aus verschiedenen Filmpatronen ausgezogenes Filmmaterial, das entlang verschiedener Führungswege transportiert wird, aufeinanderfolgend zu einem einzigen Führungsweg zu führen, so daß das Fotomaterial, wobei es sich insbesondere um zu entwickelndes Filmmaterial handelt, nacheinander angeordnet in dem einzigen Führungsweg weitertransportiert wird, um dann zu einer Filmentwicklungsvorrichtung transportiert zu werden.

Alle vorgenannten Verfahren zum Leiten von Filmmaterialabschnitten von verschiedenen Quellen zu einer einzigen Senke haben gemeinsam, daß mehrere Führungswege stetig zu einem einzigen Führungsweg übergehen bzw. zu einem einzigen Führungsweg zusammengeführt werden, ohne daß sie unterbrochen sind.

Dies hat verschiedene Nachteile. Zum einen müssen mehrere voll funktionsfähige Führungswege von den Fotomaterialquellen bis zu dem Zusammenführungspunkt ausgebildet werden. Dies bedeutet, daß für jeden Führungsweg Fördermittel, wie z.B. antreibende Gummirollen oder in die Lochung der Filme eingreifende Räder für jeden Führungsweg bereitgestellt werden müssen. Dabei ist die Anordnung insbesondere in dem Bereich der Zusammenführung aufgrund der dort herrschenden beengten Platzverhältnisse schwierig, vor allen Dingen wenn mehr als zwei Führungswege zusammengeführt werden. So muß insbesondere aus Platzgründen in dem Bereich der Zusammenführung auf zusätzliche Rollen verzichtet werden, die eine sichere Führung des Filmmaterials gewährleisten würden. Dies hat zur Folge, daß gerade im Bereich der Zusammenführung Störungen durch verklemmendes Filmmaterial auftreten kann.

Aus den oben genannten Gründen werden bevorzugt nur immer zwei Führungswege zusammengeführt. Sollen mehrere Führungswege zusammengeführt werden, so erfolgt dies in einem räumlichen Abstand, so daß zuerst zwei Führungswege zusammengeführt werden und später nochmals zwei usw. Dies erhöht jedoch den Platzbedarf.

Aufgabe der Erfindung ist es, Fotomaterial aus verschiedenen Materialquellen verläßlich und platzsparend zu einer Fotomaterialsenke zusammenzuführen oder Fotomaterial von einer Quelle auf mehrere Senken platzsparend und verläßlich zu verteilen.

Die Aufgabe der Erfindung wird durch den Gegenstand des Anspruches 1 gelöst. Vorteilhafte Weiterbildungen gehen aus den Unteransprüchen hervor.

Vorteilhaft weist die erfindungsgemäße Fotomaterial-Leitanlage verschiedene voneinander beabstandete Quellen und Senken, insbesondere Führungswege für Fotomaterial auf, die wählbar durch den erfindungsgemäßen Selektor verbunden werden können. Der Selektor ist wie ein Führungsweg zur Führung von Fotomaterial ausgebildet. Im Unterschied zu Führungswegen ist er jedoch bewegbar, insbesondere beweglich gelagen, um von einer Stellung, in der er verschiedene Quellen und Senken verbindet, zu einer anderen Stellung, in der er eine andere Verbindung zwischen Quellen und Senken erstellt, verlagen werden zu können.

Der erfindungsgemäße Selektor überbrückt also eine Unterbrechung zwischen verschiedenen Quellen und Senken, wobei gewählt werden kann, welche der voneinander beabstandeten Quellen und Senken durch den Selektor verbunden werden sollen.

Der erfindungsgemäße Selektor ersetzt demnach den aus dem Stand der Technik bekannten Verzweigungsbereich bzw. Zusammenführungsbereich, in dem mehrere Führungswege aufeinander zu liefen, um ineinander überzugehen. Dadurch wird die Platzenge in dem Bereich der Zusammenführung vermieden und ein sicherer Transport des Filmmaterials wird gewährleistet.

Erfindungsgemäß laufen mehrere, z.B. drei, Führungswege auf einen Bereich zu, in dem der Selektor beweglich gelagen ist, und ein Führungsweg läuft z.B. gegenüberliegend zu dem Einlaufbereich der drei Führungswege von dem Bewegungsbereich des Selektors weg. Der Selektor wird dann so bewegt, daß er wahlweise einen der drei zu dem Selektorbereich hinlaufenden Führungswege mit dem einen weglaufenden Führungsweg verbindet.

Die Führungswege können so ausgebildet sein, daß sie wahlweise Fotomaterial zum Selektor abgeben, also als Fotomaterial-Quelle arbeiten, oder Fotomaterial vom Selektor aufnehmen, also als Fotomaterial-Senke arbeiten. Vorteilhaft sind mindestens drei voneinander beabstandete Führungswege vorgesehen (die Anzahl der Quellen und Senken beträgt mindestens drei).

Der Selektor kann zum Erstellen einer Verbindung als eine einfache Führung ausgebildet sein, er kann aber auch selbst als eine Vergabelung oder Verzweigung ausgebildet sein, so daß z.B. durch den Selektor in einem definierten Verbindungszustand parallel zwei oder mehrere Quellen bzw. Senken zu einer Senke bzw. Quelle zusammengeführt werden, um in einer Verbindungsstellung mehr als nur eine Quelle mit nur einer Senke zu verbinden. Vorzugsweise ist der Selektor jedoch ohne Verzweigung ausgebildet, um die bereits oben dargelegten Nachteile der Verzweigung (Platzenge) zu vermeiden.

Die Fotomaterial-Leitanlage kann mehrere Selektoren aufweisen, die z.B. parallel oder hintereinander angeordnet sind, um die Vielfalt der möglichen Verbindungen zwischen hin- und weglaufenden Führungswegen bzw. Quellen und Senken zu erhöhen und um parallel mehrere Quellen mit mehreren Senken zu verbinden.

Um den Selektor bewegbar auszubilden, ist dieser vorzugsweise beweglich gelagen. Dazu kann er z.B. auf Schienen geführt werden, mit einer Welle verbunden sein, eine Gelenkachse aufweisen und/oder magnetisch gelagen sein, um eine möglichst reibungslose Lagerung und schnellen Stellungswechsel zu ermöglichen.

Vorteilhaft ist die Position des Aufnahmeendes und/oder des Abgabeendes eines Selektors veränderbar. Hierzu kann ein Selektor z.B. mit Gelenken und/oder verschwenkbaren Armen versehen werden. Vorzugsweise wird der Selektor zusätzlich oder ausschließlich so gestaltet, daß er insgesamt verschwenkbar ist, um so mit einer Schwenkbewegung eine Verbindung zwischen unterschiedlichen Führungswegen herzustellen.

Ist der Selektor verschwenkbar, so kann der Selektor z.B. mit der Schwenkachse fest verbunden sein und die Schwenkbewegung durch ein Drehen der Schwenkachse bewirkt werden oder er ist frei um die Schwenkachse schwenkbar und die Schwenkbewegung wird durch ein weiteres Betätigungselement, z.B. ein Solenoid, erreicht.

Der Selektor kann auch um mehrere Schwenkachsen schwenkbar gelagert sein, um so eine größtmögliche Flexibilität zu erzielen. Insbesondere kann der Selektor so gestaltet werden, daß er mit seinem Aufnahmeende und/oder seinem Abgabeende jeweils mit dem gegenüberliegenden Wegende eine lösbare Verbindung eingeht (z.B. einschnappt).

Vorteilhaft werden die Führungswege so gestaltet, daß der Abstand zwischen den durch den Selektor zu verbindenden Führungswegen (Quellen/Senken) konstant ist. Alternativ kann jedoch auch der Abstand zwischen Aufnahmeende und Abgabeende des Selektors veränderlich gestaltet sein. Hierzu wird der Selektor z.B. verlängerbar bzw. ausziehbar gestaltet. Dazu kann er z.B. einen teleskopischen Aufbau aufweisen oder ausklappbare Führungswege oder Führungsarme aufweisen, die mit Gelenken versehen sind. Auch kann, wie bereits oben bemerkt, der Selektor eine Vergabelung mit unterschiedlich langen Ästen aufweisen, wobei jedes Astende z.B. als Aufnahmeende ausgestaltet ist, aber eine unterschiedliche Entfernung und Lage zum Abgabeende hat.

Der durch die Verwendung des Selektors gegenüber der weichenartigen Zusammenführung mehrerer Führungswege zu einem Führungsweg gewonnene Platz kann dazu verwendet werden, Fördermittel am Selektor oder an den Quellen oder Senken vorzusehen. Diese Fördermittel werden zur aktiven Förderung des im Selektor vorhandenen Filmmaterials verwendet. Alternativ kann der Selektor natürlich auch als einfache passive Führung für Filmmaterial ausgebildet sein.

Insbesondere kann der Selektor an seinem Aufnahmeende mit einer aktiven Fördereinrichtung versehen sein, um Fotomaterial aktiv zu erfassen, das ihm von einer Quelle angeboten wird. Dadurch können gegenüber dem Stand der Technik mehrere Fördermittel eingespart werden, die ansonsten bei jeder einzelnen Quelle vorgesehen werden müßten. Entsprechend kann der Selektor an seinem Abgabeende mit einem Fördermittel versehen sein.

Gerade in dem Zusammenführungsbereich, der beim Stand der Technik aufgrund des geringen Platzes kritisch war und nur beschränkt mit aktiven Fördermitteln versehen werden konnte, können am entsprechenden Selektorende und/oder an dem gegenüberliegenden Ende des Führungsweges (Quelle/Senke) aktive Fördermittel vorgesehen werden, um einen gezielten Übergang zwischen Führungsweg (Quelle/Senke) und Selektor (in beide Richtungen) zu gewährleisten. Die aktiven Fördermittel erfassen das Fotomaterial bevorzugt mittels Form-, Kraft- und/oder Reibungsschluß. Zum Beispiel können, wie im Stand der Technik üblich, Gummirollen oder in die Lochung eingreifende Räder verwendet werden. Bevorzugt werden die Fördermittel dabei so gestaltet, daß sie bei jeder Ausrichtung des Selektors das Fotomaterial im Übergangsbereich erfassen können.

Dazu wird das Fördermittel vorzugsweise so gestaltet, daß im Übergangsbereich zwischen Selektor und Führungsweg (Quelle/Senke), falls eine Richtungsänderung der Führung des beförderten Filmmaterials erforderlich ist, die Kontaktzeit des Filmmaterials mit dem Fördermittel erhöht ist bzw. die Kontaktlänge vergrößert ist, um so die erforderliche Richtungsänderung zuverlässig zu bewerkstelligen.

Aufgrund des im Gegensatz zum Stand der Technik verfügbaren Platzes, ist es auch möglich, die aktiven Fördermittel so zu gestalten, daß sie in ihrer Lage und/oder Ausrichtung veränderlich sind, so daß sie je nach Verbindungsstellung in unterschiedliche Richtungen fördern.

Alternativ oder zusätzlich kann auch das Ende des Führungsweges (Quelle/Senke), das dem Selektor gegenüberliegt, beweglich gestaltet werden, um seine Ausrichtung derjenigen des Selektors anzupassen, um einen stetigen Übergang zwischen Selektor und Quelle/Senke zu gewährleisten. Hierzu kann z.B. das Ende des Führungsweges flexibel gestaltet werden, indem es z.B. aus einzelnen gegeneinander verschwenkbaren Rippen gebildet wird, um dem Ende des Führungsweges einen gewünschten gekrümmten oder geradlinigen Verlauf zu geben.

Alternativ oder zusätzlich kann auch das Aufnahmeende einer Senke (bzw. eines Selektors) im Querschnitt aufgeweitet sein, um so insbesondere trichterähnlich vom Selektor (bzw. von der Quelle) abgegebenes Filmmaterial, auch wenn dieses je nach Selektorstellung aus unterschiedlichen Richtungen kommt, jeweils sicher zu erfassen.

Alternativ oder zusätzlich können auch das Auf- und/oder Abgabeende des Selektors so gestaltet werden, daß deren Ausrichtung veränderlich ist, um sie so je nach Selektorstellung, immer der Ausrichtung des gegenüberliegenden Führungsweges anzupassen. Hierzu kann das Ende des Selektors z.B. mit verketteten Rippen oder flexiblen Materialien ausgebildet sein.

Vorteilhaft ist die Fotomaterial-Leitanlage mit einer Steuereinrichtung zum Steuern der Verbindungsstellung des Selektors (oder von mehreren Selektoren) versehen. Dadurch kann eine möglichst große Verbindungsvielfalt zwischen den voneinander beabstandeten Fotomaterial-Führungswegen (Quellen/Senken) erzielt werden. Münden z.B. eine Anzahl Führungswege in einen kreisförmigen Selektorbereich, so kann durch einfaches Drehen des Selektors um den Mittelpunkt der Kreisfläche eine Verbindung zwischen verschiedenen Führungswegen hergestellt werden. Ist der Selektor zweigliedrig mit einem schwenkbaren Gelenk ausgebildet, so ist jeder Führungsweg mit jedem verbindbar. Die jeweilige Verbindungsstellung des Selektors wird dabei durch die Steuereinrichtung bestimmt.

Wie bereits erwähnt, können zur Bewegung des Selektors Solenoide, Motoren oder andere Stellorgane bzw. Betätigungsmittel auch hydraulischer Art verwendet werden.

Vorteilhaft wird eine erfindungsgemäße Fotomaterial-Leitanlage so gestaltet, daß eine Anzahl von Führungswegen (Quellen/Senken) auf den Selektorbereich, in dem der Selektor angeordnet ist, zuläuft (bzw. davon wegläuft) und ein Führungsweg (Senke/Quelle) von dem Selektorbereich wegläuft (bzw. darauf zuläuft). Soll in diesem Falle Fotomaterial auf allen Führungswegen transportiert werden und ein überlappendes Zusammenlaufen verschiedenen Fotomaterials in einem einzigen Führungsweg vermieden werden, um Staus und gegenseitige Beschädigung des Filmmaterials zu vermeiden, so ist eine zeitliche Steuerung des Fotomaterialtransports erforderlich. Gibt es mehr Quellen als Senken, so wird der Selektor und der Transport des Fotomaterials so gesteuert, daß die Fotomaterialabschnitte nacheinander, Quelle für Quelle zu einer Senke (bzw. eine geringere Anzahl von Senken) geleitet werden. In der umgekehrten Richtung erfolgt durch den Selektor eine Verteilung der Fotomaterialabschnitte von einer Quelle (bzw. einer geringeren Anzahl von Quellen) auf eine größere Anzahl von Senken und zwar aufeinanderfolgend Senke für Senke.

Vorteilhaft bei der erfindungsgemäßen Fotomaterial-Leitanlage ist gegenüber dem Stand der Technik, daß durch die Verwendung des beweglichen Selektors immer nur eine aktive Überbrückung zwischen einer Quelle und einer Senke zu einer Zeit gegeben ist. Im Stand der Technik laufen jedoch mehrere Führungswege zu einem Punkt zusammen, wobei auf allen Führungswegen gleichzeitig ein Transport erfolgen kann. Somit ist erfindungsgemäß durch die Verwendung des Selektors bereits konstruktionsbedingt ein "Zusammenstoß" von Fotomaterial, das von verschiedenen Führungswegen herrührt, verhindert.

Sind mehrere Fotomaterialquellen vorhanden, z.B. mehrere Abspulkammern für Filmpatronen, so wird mit dem Selektor vorteilhaft zyklisch eine Verbindung nacheinander mit jeder Fotokammer hergestellt. Dadurch hat der Bediener immer ausreichend Zeit, die Patronen in den Abspulkammern auszuwechseln, wenn die Abspulkammern gerade nicht mit dem Selektor verbunden sind.

Die ganze Anordnung ist hierzu vorzugsweise lichtdicht gestaltet. Um den Fotomaterialtransportbereich gegenüber den Abspulkammern lichtdicht abzuschließen, wenn eine Filmpatrone ausgewechselt wird, sind vorteilhaft Abdichtmittel, wie z.B. eine Klappe, vorgesehen. Erfindungsgemäß kann der Selektor so gestaltet werden, daß er, wenn er in Verbindungsstellung mit einer Abspulkammer (und dem evenutuell darin enthaltenen Führungsweg) gebracht wird, das Dichtmittel (die Klappe) öffnet. Wenn er aus der Verbindungsstellung wieder wegbewegt wird, verschließt der Selektor vorteilhaft automatisch das Dichtmittel bzw. die Klappe.

Sollte der Abstand von der Senke, zu der das abgespulte Filmmaterial jeweils geführt werden soll, und den Abspulkammern variieren, so wird, wie oben ausgeführt, entweder der Selektor in seiner Länge variabel gestaltet oder es wird der Führungsweg in der Abspulkammer verlängert bzw. alternativ außerhalb der Abspulkammer im Bedarfsfall ein Führungswegabschnitt angefügt oder die Lage der Abspulkammern wird passend gewählt.

Im Stand der Technik sind die Trennmesser zum Durchtrennen des Rollenfilmmaterials in den Abspulkammern angeordnet. Erfindungsgemäß kann auch der Selektor mit einem Trennmesser versehen werden, so daß die jeweiligen Trennmesser in den einzelnen Abspulkammern eingespart werden können. Auch kann der Selektor das Filmmaterial direkt aus der Abspulkammer mit einer Greifeinrichtung ziehen bzw. das aus der Abspulkammer abgespulte Filmmaterial aufnehmen, ohne daß zwischen der Filmpatrone und dem Selektor ein extra Führungsweg oder eine zusätzliche Fördereinrichtung vorhanden wäre.

Bei den erfindungsgemäßen Fotomaterialquellen bzw. Fotomaterialsenken handelt es sich z.B. um Fotomaterialspeichereinrichtungen, wie z.B. Fotomaterialpuffer oder Fotomaterialspeicher, aber auch um die beschriebenen Führungswege, die Fotomaterial abgeben oder aufnehmen. Dabei können die Fotomaterialquellen und die Fotomaterialsenken so ausgebildet sein, daß sie, wie dies bei einem Speicher oder einem Führungsweg der Fall ist, sowohl als Senke als auch als Quelle arbeiten können.

Erfindungsgemäß kann die Steuereinrichtung auch so gestaltet sein, daß sie auf dem Filmmaterial oder den zugeordneten Leaderkarten aufgebrachte Information erfaßt, verarbeitet und dann zur Steuerung des Selektors bzw. der Selektoren verwendet. Auf diese Art und Weise können je nach Filmtyp bzw. Wunsch des Kunden die Filme oder einzelnen Filmabschnitte gezielt zu unterschiedlichen Verarbeitungsstationen gefahren werden, um dort einer jeweils anderen, der gelesenen Information entsprechenden Verarbeitung unterzogen zu werden.

Hierzu kann z.B. auch der Selektor mit einer Erfassungseinrichtung versehen sein, um z.B. die Information auf der Leaderkante zu erfassen. Je nachdem, ob das zu der Leaderkante gehörende Filmmaterial von der Steuereinrichtung als zur Weiterverarbeitung geeignet oder nicht geeignet angesehen wird, wird dann das Filmmaterial von dem Selektor aus der Quelle herausgezogen oder eine weitere Quelle wird mittels des Selektors abgefragt.

Auch kann die erfindungsgemäße Fotomaterial-Leitanlage zum Sortieren verwendet werden, um z.B. gewisse Fotoabschnitte auszusortieren, die unterbelichtet oder überbelichtet sind, um sie z.B. einer Sonderbearbeitung zu unterziehen oder völlig auszusortieren.

Erfindungsgemäß werden vorteilhaft Sensoren eingesetzt, um den Transport des Fotomaterials aus den Fotomaterialquellen bzw. zu den Fotomaterialsenken (von und zu den Führungswegen) zu überwachen. Dadurch ist es möglich, den Stellungswechsel des Selektors zeitlich präzise vorzunehmen. Dies heißt z.B., wenn das Fotomaterial von einer Quelle endet, wird der Selektor zu der nächsten Quelle umgeschwenkt, um von dort neues Fotomaterial aufzunehmen.

Durch die Bewegung des Selektors von einer Verbindungsstellung in die nächste wird eine gewisse Lücke zwischen den Fotomaterialabschnitten erzeugt, wenn diese zu einem Führungsweg bzw. zu einer Fotomaterialsenke zusammengeführt werden sollen. Ist es erwünscht, diese Lücke zu minimieren, so kann durch die Überwachung mittels der Sensoren und einer kurzzeitigen Fördergeschwindigkeitserhöhung die Lücke geschlossen werden. Die Fördergeschwindigkeitserhöhung wird erzielt, indem mittels der Steuereinrichtung ein Fotomaterial-Fördermittel angesteuert wird und dieses zu einer schnelleren Förderung des Fotomaterials veranlaßt wird.

Das Verteilen von Fotomaterial von verschiedenen Quellen zu verschiedenen Senken mittels der erfindungsgemäßen Fotomaterial-Leitanlage kann noch flexibler gestaltet werden, wenn an den Führungswegen Fotomaterialspeicher oder Fotomaterialpuffer vorgesehen werden, die Fotomaterial aufnehmen und abgeben. Dadurch können z.B. Verzögerungen beim Fotomaterialtransport oder durch den Wechsel der Verbindungsstellung des Selektors ausgeglichen werden.

Weitere vorteilhafte Merkmale der Erfindung ergeben sich aus der folgenden Beschreibung von Ausführungsbeispielen, die anhand von Figuren erfolgt. Vorteilhafte Merkmale verschiedener Ausführungsformen können miteinander kombiniert werden.
- Fig. 1a: zeigt eine erste Verbindungsstellung einer ersten Ausführungsform einer erfindungsgemäßen Fotomaterial-Leitanlage;
- Fig. 1b: zeigt eine zweite Verbindungsstellung der ersten Ausführungsform der erfindungsgemäß Fotomaterial-Leitanlage;
- Fig. 2a: zeigt eine erste Verbindungsstellung einer zweiten Ausführungsform einer erfindungsgemäßen Fotomaterial-Leitanlage;
- Fig. 2b: zeigt eine zweite Verbindungsstellung der zweiten Ausführungsform der erfindungsgemäßen Fotomaterial-Leitanlage.

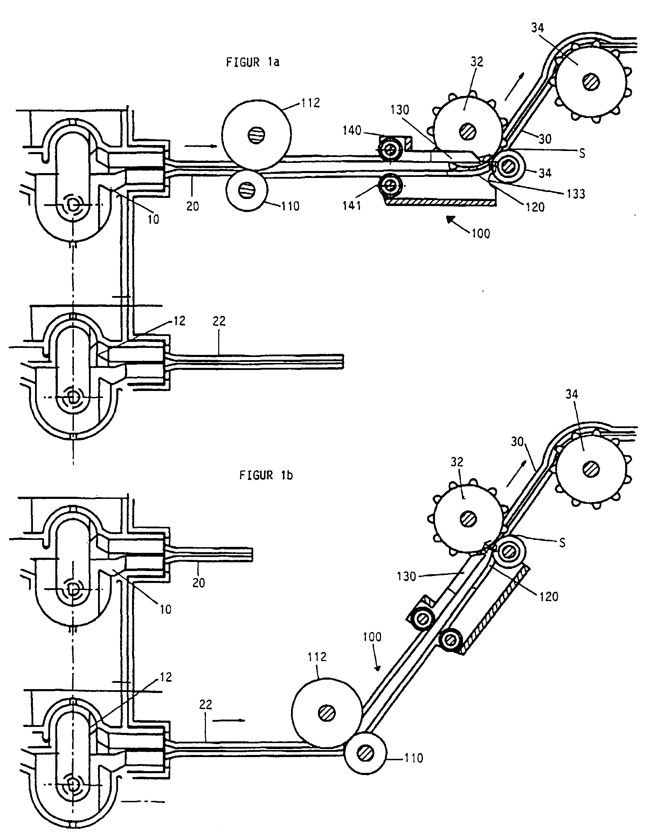

In Fig. 1a und 1b zeigen 10 und 12 schematisch Abspulkammern, in die Filmpatronen eingelegt werden können. Mit 100 ist der Selektor bezeichnet, mit 20, 22 und 30 sind Führungswegabschnitte bezeichnet. In der Position der Fig. 1a verbindet der Selektor den Führungswegabschnitt 20 mit dem Führungswegabschnitt 30. In der Verbindungsstellung, die in Fig. 1b gezeigt ist, verbindet der Selektor den Führungswegabschnitt 22 mit dem Führungswegabschnitt 30. Der Selektor weist an einem Ende Aufgreifrollen 110 und 112, die z.B. als Gummirollen ausgebildet sind, auf. Diese Rollen können aktiv betrieben werden, um Fotomaterial zu erfassen oder abzugeben.

Der Selektor wird im Übergangsbereich zu dem Führungsweg 30 durch einen Kanal mit den Seitenwänden 120 und 130 gebildet. Die Bezugszeichen 140 und 141 zeigen Mitläuferrollen, die ebenfalls einen Bestandteil des Selektors bilden.

Das Rad 32 dient dem Transport von Filmmaterial, indem es in die Lochung des Filmmaterials eingreift. Es ist ortsfest am Führungsweg 30 angeordnet. Dem Rad 32 gegenüberliegend ist eine Mitläuferrolle 34 am Führungsweg 30 angeordnet. Der Selektor 100 ist bei 133 mit einer Ausbuchtung versehen, die einen Teil der Achse der Rolle 34 in der zweiten Verbindungsstellung umgreift.

Die Seitenwand 120 ist an ihrem dem Führungsweg 30 zugewandten Ende gekrümmt, so daß in der ersten Verbindungsstellung (Fig. 1a) die Führung des Fotomaterials am Ende des Selektors gegenüber dem Führungsweg 30 ausgerichtet ist. Die geradlinige Gestaltung der Seitenwand 130 bewirkt auch in der zweiten Verbindungsstellung einen stetigen Übergang des Fotomaterials vom Selektor zum Führungsweg.

Zur Weiterförderung des Filmmaterials ist zusätzlich ein Rad 34 vorgesehen.

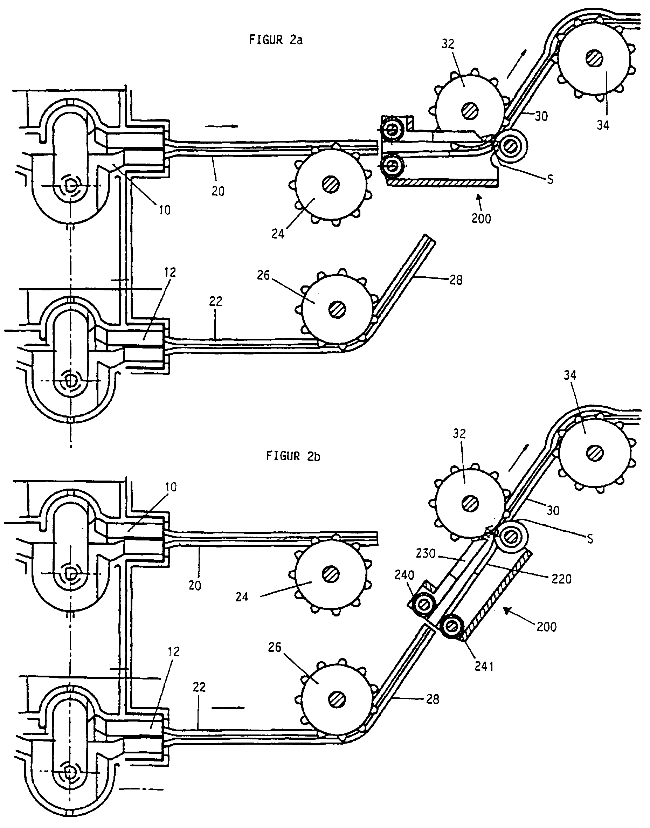

Fig. 2a und Fig. 2b zeigen eine zweite Ausführungsform einer erfindungsgemäßen Fotomaterial-Leitanlage. Der Selektor 200 ist in diesem Fall kürzer ausgebildet, weist aber ebenfalls die Führungswände 230 und 220 sowie die Mitläuferrollen 240 und 241 auf. Der Führungskanal 22 ist im Gegensatz zur Ausführungsform 1 verlängert und durchläuft eine Krümmung, so daß der Abschnitt 28 des Führungskanals 22, der dem Führungskanal 30 gegenüberliegt, mit diesem ausgerichtet ist. Zum Filmtransport sind jeweils Räder 24 und 26 an den Führungskanälen 20 und 22 vorgesehen. Da in jeder Stellung ein stetiger Richtungsübergang zwischen dem Führungskanal 20 bzw. 28 und dem Selektor 200 gegeben ist, wurde auf die Aufgreifrollen 112 und 110 verzichtet. Dennoch können z.B. anstelle der Mitläuferrollen 240 und 241 auch aktiv betriebene Aufgreifrollen vorgesehen werden.

Mit S ist in den Figuren die Schwenkachse bezeichnet, um die der Selektor geschwenkt wird. Zur Verbindung des Selektors mit der Schwenkachse kann eine zusätzliche Stützkonstruktion (nicht gezeigt) vorgesehen werden.

## Patentansprüche

1. Fotomaterial-Leitanlage zum Leiten von Fotomaterial, insbesondere Filme oder Fotopapier von mindestens einer Fotomaterial-Quelle, die Fotomaterial abgibt, zu mindestens einer Fotomaterial-Senke, die Fotomaterial aufnimmt, und die folgendes aufweist: einen Selektor mit
- einem Aufnahmeende zum Aufnehmen von Fotomaterial von einer Fotomaterial-Quelle und
- einem Abgabeende zum Abgeben von Fotomaterial zu einer Fotomaterial-Senke, wobei der Selektor zum Führen des Fotomaterials vom Aufnahmeende zum Abgabeende ausgebildet ist,
wobei der Selektor
zwischen verschiedene Verbindungstellungen bewegbar ist, in denen jeweils Fotomaterial von mindestens einer Fotomaterial-Quelle zu mindestens einer Fotomaterial-Senke mit Hilfe des Selektors geleitet werden kann, wobei mit einem Wechsel der Verbindungsstellung mindestens eine der an der Verbindung teilnehmenden Quellen oder Senken wechselt.

2. Fotomaterial-Leitanlage nach Anspruch 1, **dadurch gekennzeichnet**, daß der Selektor von einer Verbindungsstellung in eine andere Verbindungsstellung verschwenkbar ist.

3. Fotomaterial-Leitanlage nach Anspruch 1 bis 2, **dadurch gekennzeichnet**, daß der Abstand zwischen dem Aufnahmeende und dem Abgabeende des Selektors veränderbar ist.

4. Fotomaterial-Leitanlage nach Anspruch 1 bis 3, **dadurch gekennzeichnet**, daß der Selektor mit Fotomaterial-Fördermitteln versehen ist, mittels derer durch den Selektor geführtes Fotomaterial aktiv förderbar ist.

5. Fotomaterial-Leitanlage nach Anspruch 1 bis 4, **dadurch gekennzeichnet**, daß der Selektor am Aufnahmeende und/oder am Abgabeende mit einer Erfassungseinrichtung versehen ist, die das Fotomaterial durch Form-, Kraft- und/oder Reibungsschluß erfaßt, um es aufzunehmen bzw. abzugeben.

6. Fotomaterial-Leitanlage nach Anspruch 1 bis 5, **dadurch gekennzeichnet**, daß eine Steuereinrichtung den Fotomaterialtransport in der Leitanlage und den Stellungswechsel des Selektors derartig steuert, daß Fotomaterialabschnitte von verschiedenen Quellen zu einer Senke aufeinanderfolgend geleitet werden und/oder daß aufeinanderfolgende Fotomaterialabschnitte von einer Quelle auf verschiedene Senken verteilt werden.

7. Fotomaterial-Leitanlage nach Anspruch 6, **dadurch gekennzeichnet**, daß Sensoren zur Überwachung zumindest des Fotomaterialtransportes, der Selektor-Stellung oder der Selektorbewegung vorgesehen sind, wobei die Sensorsignale der Steuereinrichtung zur Steuerung zugeführt werden.

8. Fotomaterial-Leitanlage nach Anspruch 6 oder 7, **dadurch gekennzeichnet**, daß die Steuerung so erfolgt, daß bei Zusammenführung von Fotomaterialabschnitten der Abstand zwischen den Fotomaterialabschnitten minimiert wird.

9. Fotomaterial-Leitanlage nach Anspruch 1 bis 8, **dadurch gekennzeichnet**, daß mindestens eine mit dem Selektor verbindbare Quelle oder Senke mit einem Fotomaterialspeicher oder Fotomaterialpuffer verbunden ist, der zur Aufnahme und/oder Abgabe von Filmmaterial ausgebildet ist.

10. Fotomaterial-Leitanlage nach Anspruch 9, **dadurch gekennzeichnet**, daß der Materialspeicher als Abspulkammer ausgebildet ist, die Film-Patronen aufnimmt und Film-Rollenmaterial aus der Patrone abgibt, das zu dem Selektor geführt wird.
